# EUROPEAN PATENT APPLICATION

(11) **EP 4 814 559 A1**
(43) Date of publication of application: **30.09.2026**
(21) Application number: 25823709.8
(22) Date of filing: 26.09.2025
(51) Int. Cl.: G02B 13/00, G02B 27/01, G02B 9/64

(54) **PROJECTION LENS AND VEHICLE-MOUNTED HEAD-UP DISPLAY SYSTEM**

(30) Priority: 26.01.2025 CN 202520174538 U; 26.01.2025 CN 202510122778; 04.09.2025 CN 202511261906
(71) Applicant: Beijing Jingwei Hirain Technologies Co., Inc., Beijing 100020 (CN)
(72) Inventor: CHENG, Yinuo, Beijing 100016 (CN); SHANG, Shan, Beijing 100016 (CN); LI, Chunlian, Beijing 100016 (CN); LYU, Zhenlyu, Beijing 100016 (CN)
(74) Representative: Zacco Norway AS
(86) International application number: PCT/CN2025/124326
(87) International publication number: WO 2026/157305

(57) **Abstract**

A projection lens and an in-vehicle head-up display system are provided in the present disclosure. The projection lens includes: a front lens group, an aperture stop and a rear lens group that are arranged coaxially in the above-listed sequence from an object plane to an image plane. The front lens group includes: a first negative lens, a first positive lens and a second negative lens that are arranged coaxially in the above-listed sequence from the object plane to the aperture stop. The first negative lens and the second negative lens are concave meniscus lenses, a concave surface of the first negative lens faces the first positive lens, and a concave surface of the second negative lens faces the aperture stop. The rear lens group includes: a third negative lens, a second positive lens and a third positive lens that are arranged coaxially in the above-listed sequence from the aperture stop to the image plane. Through this technical solution, a to-be-projected picture is projected by using only six lenses. Compared with the related art, due to fewer lenses, a number of surfaces of lens glass in contact with air is reduced, light energy loss is significantly reduced, and light transmission efficiency is greatly increased. In addition, the cost is also reduced due to the fewer lenses.

## Description

The present disclosure claims priorities to Chinese Patent Application No. 202510122778.8, filed on January 26, 2025, entitled "HUMAN-COMPUTER INTERACTION SYSTEM INTEGRATING ARHUD AND HOLOGRAPHIC INSTRUMENT PANEL, AND AUTOMOBILE", Chinese Patent Application No. 202520174538.8, filed on January 26, 2024, entitled "DUAL HEAD-UP DISPLAY FUSION IMAGING SYSTEM AND AUTOMOBILE", and Chinese Patent Application No. 202511261906.3, filed on September 04, 2025, entitled "PROJECTION LENS AND IN-VEHICLE HEAD-UP DISPLAY SYSTEM," which are hereby incorporated by reference in their entireties.

### FIELD

The present disclosure relates to the field of optical projection imaging, and in particular to a projection lens and an in-vehicle head-up display system.

### BACKGROUND

An in-vehicle Head-Up Display (HUD) imaging system is a technology that projects vehicle information onto a windshield or a separate transparent screen directly in front of a driver. The driver does not need to look down at display information on navigation software on a mobile phone, or an instrument panel or a center console display on an automobile. Concentrated driving is allowed, and the probability of road traffic accidents is reduced.

In a traditional in-vehicle HUD imaging system, a Picture Generation Unit (PGU) system is very complex. A traditional PGU projection lenses has a large number of lens elements, results in low light transmission efficiency.

### SUMMARY

In view of this, the present disclosure provides a projection lens that improves light transmission efficiency while reducing costs.

The present disclosure further provides an in-vehicle head-up display system including the above-mentioned projection lens.

As can be seen from the above technical solution, in the projection lens provided by the present disclosure, a to-be-projected picture is projected by using only six lenses. Compared with the related art, due to fewer lenses, a number of surfaces of lens glass in contact with air is reduced, light energy loss is significantly reduced, and light transmission efficiency is greatly increased. In addition, the cost is also reduced due to the fewer lenses.

The present disclosure further provides an in-vehicle head-up display system. Since the above-mentioned projection lens is adopted in the in-vehicle head-up display system, the in-vehicle head-up display system also has corresponding beneficial effects. Details may be referred to the above description, and would not be repeated here.

### BRIEF DESCRIPTION OF THE DRAWINGS

To more clearly illustrate the technical solutions in the embodiments of the present disclosure or the related art, the drawings used for the description of the embodiments or the related art would be briefly introduced below. Obviously, the drawings described below are only some embodiments of the present disclosure. For those skilled in the art, other drawings may also be obtained based on these drawings without creative effort.
FIG. 1 is a system diagram of an in-vehicle projection lens in Embodiment 1 according to the present disclosure (excluding an object plane);
FIG. 2 is a schematic diagram of FIG. 1 after adding light;
FIG. 3 is a system diagram of an in-vehicle projection lens in Embodiment 1 according to the present disclosure (including an object plane);
FIG. 4 is a schematic diagram of FIG. 3 after adding light;
FIG. 5 is a spot diagram of an in-vehicle projection lens in Embodiment 1 according to the present disclosure;
FIG. 6 is a root mean square diagram of wave aberration of an in-vehicle projection lens in Embodiment 1 according to the present disclosure;
FIG. 7 is a distortion diagram of an in-vehicle projection lens in Embodiment 1 according to the present disclosure;
FIG. 8 is a MTF curve diagram of an in-vehicle projection lens in Embodiment 1 according to the present disclosure;
FIG. 9 is a system diagram of an in-vehicle projection lens in Embodiment 2 according to the present disclosure (excluding an object plane);
FIG. 10 is a schematic diagram of FIG. 9 after adding light;
FIG. 11 is a system diagram of an in-vehicle projection lens in Embodiment 2 according to the present disclosure (including an object plane);
FIG. 12 is a schematic diagram of FIG. 11 after adding light;
FIG. 13 is a spot diagram of an in-vehicle projection lens in Embodiment 2 according to the present disclosure;
FIG. 14 is a root mean square diagram of wave aberration of an in-vehicle projection lens in Embodiment 2 according to the present disclosure;
FIG. 15 is a distortion diagram of an in-vehicle projection lens in Embodiment 2 according to the present disclosure;
FIG. 16 is a MTF curve diagram of an in-vehicle projection lens in Embodiment 2 according to the present disclosure;
FIG. 17 is a schematic diagram of cooperation between an illumination part and a projection lens of a head-up display system according to an embodiment of the present disclosure;
FIG. 18 is a schematic structural diagram of a head-up display system in a first embodiment of a head-up display system according to the present disclosure;
FIG. 19 is a schematic structural diagram of a head-up display system in a second embodiment of a head-up display system according to the present disclosure;
FIG. 20 is a schematic structural diagram of a head-up display system in a third embodiment of a head-up display system according to the present disclosure;
FIG. 21 is a schematic structural diagram of a head-up display system in a fourth embodiment of a head-up display system according to the present disclosure;
FIG. 22 is a schematic structural diagram of a head-up display system in a fifth embodiment of a head-up display system according to the present disclosure;
FIG. 23 is a schematic diagram of an X-direction component of picture light in a fifth embodiment of a head-up display system according to the present disclosure;
FIG. 24 is a schematic diagram of a Y-direction component of picture light in a fifth embodiment of a head-up display system according to the present disclosure; and
FIG. 25 is a partial three-dimensional diagram in a fifth embodiment of a head-up display system according to the present disclosure.

The meanings of the reference numerals in the figures are as follows:
1: first negative lens, 2: first positive lens, 3: second negative lens, 4: third negative lens, 5: second positive lens, 6: third positive lens, 7: prism, 8: aperture stop, 9: object plane, 13: image plane, 14: DMD glass cover plate; 10: picture generation unit, 20: diffusion element, 11: near-field diffusion sub-element, 12: far-field diffusion sub-element, 30: reflector assembly, 31: first reflector, 32: second reflector, 33: third reflector, 40: holographic optical element;
50: reflective assembly, 51: first reflector, 52: second reflector, 53: light deflecting element; and 60: intermediate image plane.

### DETAILED DESCRIPTION

Some of the terms used in this solution are explained in the following.

Spot diagram: this is one of the most commonly used evaluation methods in modern optical design. A smaller spot diagram indicates a smaller diffuse spot and small aberration in an optical system.

Root mean square of wave aberration: this is a method for quantifying the imaging quality of an optical system. The root mean square of wave aberration is a square root of an average of squares of all wavefront errors in the optical system. A wavefront error may be caused by various factors, including a deviation on a surface of a lens, a non-ideal shape of an optical element, and scattering of an optical material. A root mean square of wavefront aberration may be used to evaluate the resolution and imaging quality of the optical system.

Field curvature: this refers to the curvature of an image field. When a planar object passes through a lens system, an image plane after all planar object points being focused does not coincide with an ideal image plane, and is a curved surface. A vertical axis of field curvature/distortion is a field of view angle. Generally, a lens with field curvature controlled to within 100 micrometers is considered as a good lens.

For an in-vehicle projection lenses, the most important image quality indicator is MTF. A designed image quality of projection lenses is often unsatisfactory. Typically, the MTF value at 50 line pairs per millimeter is less than 0.3. Furthermore, subsequent manufacturing and assembly introduces errors such as a material refractive index error, an optical surface curvature radius error, and a fit error between an optical lens and a mechanical barrel. These errors typically reduce the MTF by 20%, which means that the MTF usually may only reach 0.24. In principle, such image quality is insufficient to satisfy sharpness requirements in practical use.

The technical solutions of the embodiments of the present disclosure would be clearly and completely described below with reference to the accompanying drawings. The described embodiments are only a part of the embodiments of the present disclosure, not all of them. All other embodiments obtained by those skilled in the art based on the embodiments of the present disclosure without creative effort are within the scope of protection of the present disclosure.

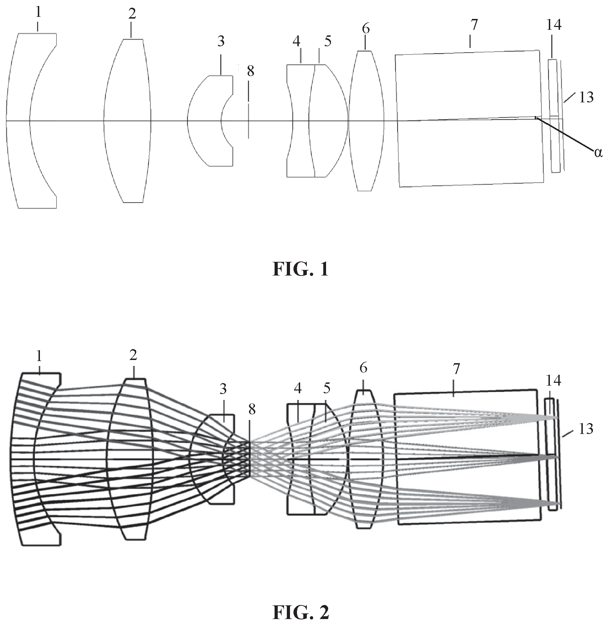

A projection lens provided by an embodiment of the present disclosure is applied to an in-vehicle head-up display system. As shown in FIG. 1, the projection lens includes: a front lens group, an aperture stop 8, and a rear lens group that are arranged coaxially in the above-listed sequence from the object plane 9 to the image plane 13.

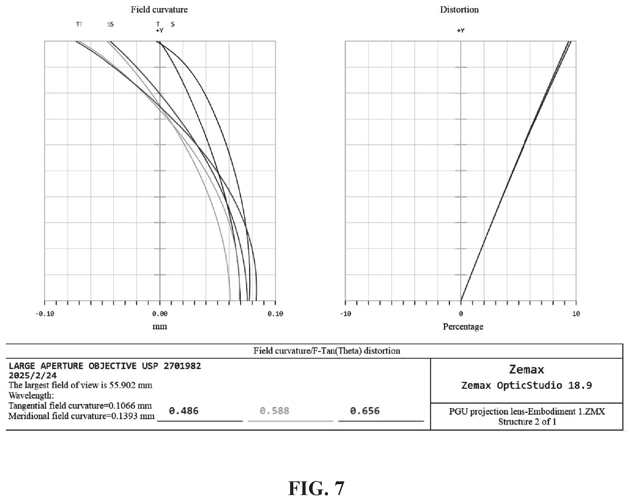

As shown in FIG. 1 and FIG. 7, the front lens group includes: a first negative lens 1, a first positive lens 2 and a second negative lens 3 that are arranged coaxially in the above-listed sequence from the object plane 9 to the aperture stop 8. The first negative lens 1 and the second negative lens 3 are concave meniscus lenses, a concave surface of the first negative lens 1 faces the first positive lens 2, and a concave surface of the second negative lens 3 faces the aperture stop 8. It may also be understood that a convex surface of the first negative lens 1 faces the object plane 9, and a convex surface of the second negative lens 3 faces the first positive lens 2.

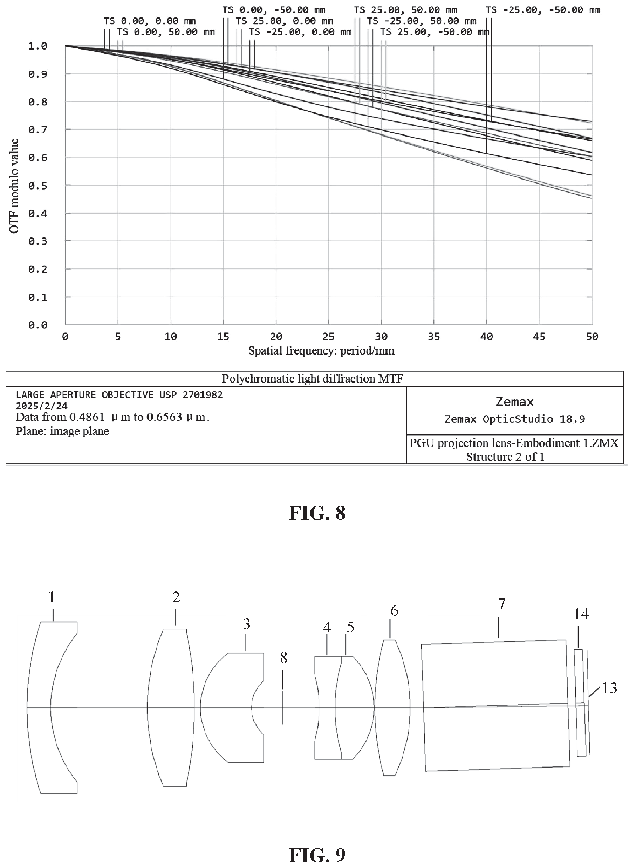

The rear lens group includes: a third negative lens 4, a second positive lens 5 and a third positive lens 6 that are arranged coaxially in the above-listed sequence from the aperture stop 8 to the image plane 13. As shown in FIG. 1 and FIG. 9, the third negative lens 4 and the second positive lens 5 are cemented together to form a cemented lens, enabling rapid assembly of the projection lens and reducing reflection and energy loss during refraction. As shown in FIG. 1 and FIG. 9, a prism 7 is arranged between the third positive lens 6 and the image plane 13, to distribute light. Furthermore, the prism 7 is a standard component to facilitate manufacturing.

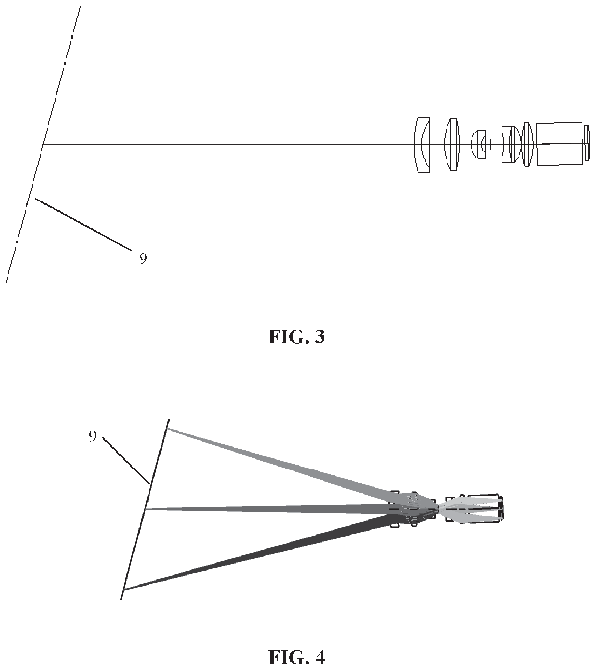

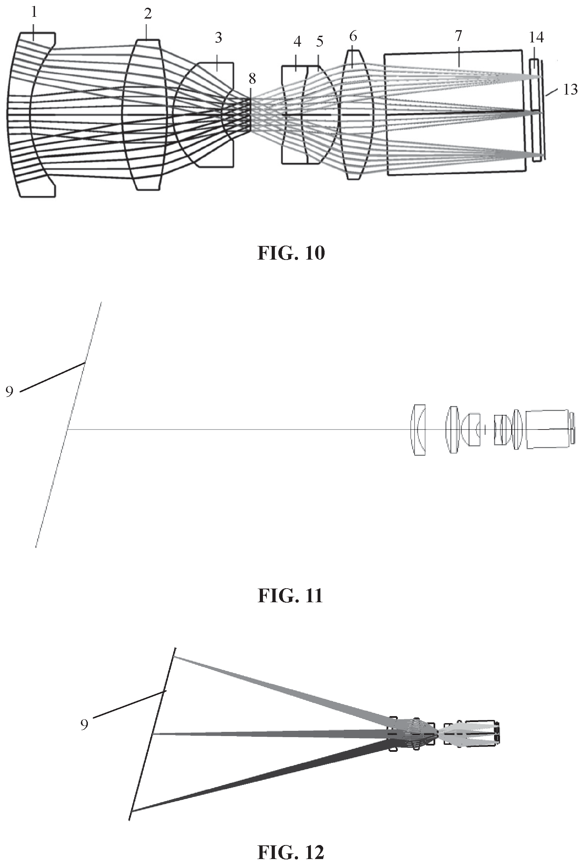

In the above technical solution, a to-be-projected picture is formed on the image plane 13, sequentially passes through the third positive lens 6, the second positive lens 5, the third negative lens 4, the aperture stop 8, the second negative lens 3, the first positive lens 2 and the first negative lens 1, and is finally projected onto the object plane 9. A propagation path of the picture may be referred to FIG. 4 and FIG. 12. In this technical solution, the to-be-projected picture is projected by using only six lenses. Compared with the related art, due to fewer lenses, a number of surfaces of lens glass in contact with air is reduced, light energy loss is significantly reduced, and light transmission efficiency is greatly increased. In addition, the cost is also reduced due to the fewer lenses.

In an optional technical solution, as shown in FIG. 1 and FIG. 9, a DMD glass cover plate 14 is provided on a DMD chip between the prism 7 and the image plane 13. The DMD glass cover plate 14 on the DMD chip mainly serves a protective function, to prevent dust or other contaminants from entering a gap and causing pixel failure. The DMD glass cover plate 14 may also isolates moisture and oxygen, to extend the life of the DMD chip. Furthermore, the presence of the DMD glass cover plate 14 ensures that when a micromirror is flipped, an inner surface of the DMD glass cover plate 14 maintains a sufficient safe distance from a top of the micromirror to prevent contact.

To optimize the above technical solution, the DMD glass cover plate 14 is made of EAGLE XG^{®} material (i.e., high-performance alkali-free borosilicate glass), enabling high light transmittance of the DMD glass cover plate 14, and ensuring a clear and bright display picture.

In an optional technical solution, the first negative lens 1, the second negative lens 3, and the third negative lens 4 are made of glass of H-ZF52 type. The glass of H-ZF52 type is an optical glass with high refractive index and low dispersion, and can satisfy projection requirements. The glass of H-ZF52 type is a type of heavy flint glass. Furthermore, since the first negative lens 1, the second negative lens 3 and the third negative lens 4 are made of glass of H-ZF52 type, projection scattering can be reduced, and image sharpness is improved. In addition, color reproduction is optimized, and light loss is reduced.

The first positive lens 2 and the third positive lens 6 are made of glass of H-LAK3 type. The glass of H-LAK3 type has a high Abbe number, low dispersion, stability and good mechanical properties (scratch and wear resistance, ensuring surface precision of the lens), and can satisfy projection requirements. The glass of H-LAK3 type is a lanthanum crown glass. In addition, the first positive lens 2 and the third positive lens 6 made of glass of H-LAK3 type avoid problems such as color edge shift, which ensures color accuracy and purity of the projected picture, and have excellent optical uniformity, which ensures the quality of the projected light and makes the projected picture more stable and clear.

The second positive lens 5 is made of glass of H-ZK7 type. The glass of H-ZK7 type has a high refractive index and low dispersion, and can satisfy projection requirements. The glass of H-ZK7 type is a heavy crown glass. Furthermore, the second positive lens 5 made of glass of H-ZK7 type reduces chromatic aberration interference, improves image sharpness, and thus restores clear projected colors. In addition, physicochemical properties of H-ZK7 may also enhance long-term stability of a projection device, and reduce maintenance costs.

In an optional technical solution, the first negative lens 1 and the third negative lens 4 are made of glass of H-ZF52 type. The glass of H-ZF52 type is an optical glass with high-refractive-index, low-dispersion, and can satisfy projection requirements. In addition, the first negative lens 1 and the third negative lens 4 made of the glass of H-ZF52 type can reduce projection scattering, improve image sharpness. In addition, color reproduction is optimized, and light loss is reduced.

The first positive lens 2 and the third positive lens 6 are made of glass of H-LAK3 type. The glass of H-LAK3 type has a high Abbe number, low dispersion, stability and good mechanical properties (scratch and wear resistance, ensuring surface precision of the lens), and can satisfy projection requirements.

The second negative lens 3 is made of glass of H-ZF1 type. The glass of H-ZF1 type has a high refractive index, high dispersion characteristics, and chemical stability. The glass of H-ZF1 type is a type of heavy flint glass. The second negative lens 3 made of glass of H-ZF1 type facilitates improving sharpness and clarity of the projected picture, and makes the projected pictures and text more clearly and legible. In addition, chromatic aberration throughout a system can be corrected, resulting in more accurate and pure colors in the projected picture, and avoiding problems such as color edge shift.

The second positive lens 5 is made of glass of H-K9L type. The glass of H-K9L type has high optical performance, chemical stability, and process adaptability. H-K9L is a colorless optical glass. Furthermore, the second positive lens 5, made of glass of H-K9L type, ensures a sufficiently bright projected picture, preventing dimming due to light loss. It also exhibits strong physical stability and resistance to damage.

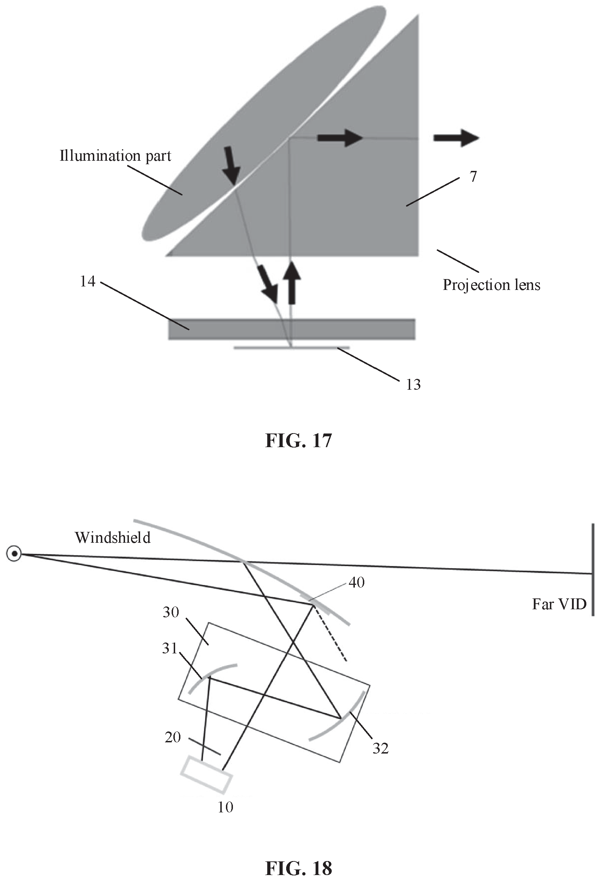

An in-vehicle head-up display system, as shown in FIG. 18 to FIG. 20, includes: an object plane 9 and the above-mentioned projection lens. A diffuser element 20 is provided at a position of the object plane 9, and an angle between a normal of the diffuser element 20 and an optical axis of the projection lens is non-zero, as shown in FIG. 3. In a preferable technical solution, the diffuser element 20 is a diffuser film. In this technical solution, the diffuser film ensures that stray sunlight rays incident on the diffuser film from an outside of the windshield along an imaging light path have a certain angle with the optical axis of the projection lens. The stray sunlight rays are prevented from reaching a DMD picture source surface, and stray light and the to-be-imaged picture would not overlap, which effectively avoids the influence of stray light. Furthermore, the diffuser film and the optical axis of the projection lens arranged at an angle serves two purposes. Firstly, reflected rays incident from the projection lens on the diffuser film are reduced. Secondly, the size of the HUD is reduced.

An in-vehicle head-up display system includes the above-mentioned projection lens. As shown in FIG. 1, an angle between an emitted chief ray of the projection lens and the optical axis of the projection lens is α, where the angle α ranges from 1.7 to 2.7 degrees. In a preferable technical solution, the angle α is 1.7 degrees. The prism 7 is a triangular glass body. The optical axis is an imaginary straight line, and represents a central axis of the optical system being rotationally symmetrical, as shown in FIG. 17.

In an optional technical solution, the picture generation unit 10 may consist of an illumination part and a projection lens. The illumination part includes a light-emitting element, a collimator, and a fly-eye lens, etc.

The technical features mentioned above, those to be mentioned below, and those shown individually in the accompanying drawings can be arbitrarily combined, as long as the combined technical features are not contradictory. All feasible combinations of technical features are technical contents explicitly described herein. Any sub-feature among multiple sub-features included in the same statement can be applied independently, and does not necessarily need to be applied together with other sub-features.

The following is a further description of this solution with reference to specific embodiments.

In Embodiment 1, as shown in FIG. 1 and FIG. 3, the first negative lens 1, the second negative lens 3 and the third negative lens 4 are H-ZF52 glass lenses. The first positive lens 2 and the third positive lens 6 are H-LAK3 glass lenses. The second positive lens 5 is an H-ZK7 glass lens. The aperture stop 8 is located between the second negative lens 3 and the third negative lens 4; and the prism 7 is made of EAGLEXG glass. A glass material between surfaces of the first negative lens 1 and the first positive lens 2 is H-ZF52, which is the material of the entire first negative lens 1 (composed of surface 1 and surface 2). Space between surface 2 and surface 3 is air. Surface 3 and surface 4 constitute lens 2, and a corresponding glass material is H-LAK3. A relationship between subsequent lens and surface sequence numbers follows the same pattern. Specific parameters of each component in this embodiment are shown in the table below.

| Surface sequence number | Lens sequence number | Radius /mm | Thickness or air gap/mm | | Glass | Caliber/mm |
|---|---|---|---|---|---|---|
| Object plane | - | ∞ | | 150 | AIR | 111.8034 |
| 1 | 1 | 31.2205 | | 3.0000 | H-ZF52 | 22.36659 |
| 2 | | 15.4563 | | 9.4018 | AIR | 19.39714 |
| 3 | 2 | 23.0314 | | 6.0000 | H-LAK3 | 20.85973 |
| 4 | | -51.2203 | | 4.6478 | AIR | 20.03832 |
| 5 | 3 | 7.4978 | | 4.3000 | H-ZF52 | 11.57518 |
| 6 | | 4.6072 | | 3.4969 | AIR | 6.778977 |
| 7 aperture stop plane | | ∞ | | 5.6555 | AIR | 4.469727 |
| 8 | 4 and 5 are cemented lens | -16.0017 | | 2.0000 | H-ZF52 | 9.702029 |
| 9 | | 27.7818 | | 5.0000 | H-ZK7 | 12.70902 |
| 10 | | -10.4970 | | 0.1000 | AIR | 14.34399 |
| 11 | 6 | 25.0165 | | 4.5000 | H-LAK3 | 17.56465 |
| 12 | | -24.9452 | | 1.7000 | AIR | 17.87354 |
| 13 | | ∞ | | 18.4000 | H-LAK3 | 16.90283 |
| 14 | 7 | ∞ | | 1.0000 | AIR | 14.6755 |
| 15 | | ∞ | | 1.1000 | EAGLEXG | 14.46233 |
| 16 | DMD glass cover plate | ∞ | | 0.5100 | AIR | 14.30815 |
| Image plane | | ∞ | | 0 | AIR | 14.1995 |

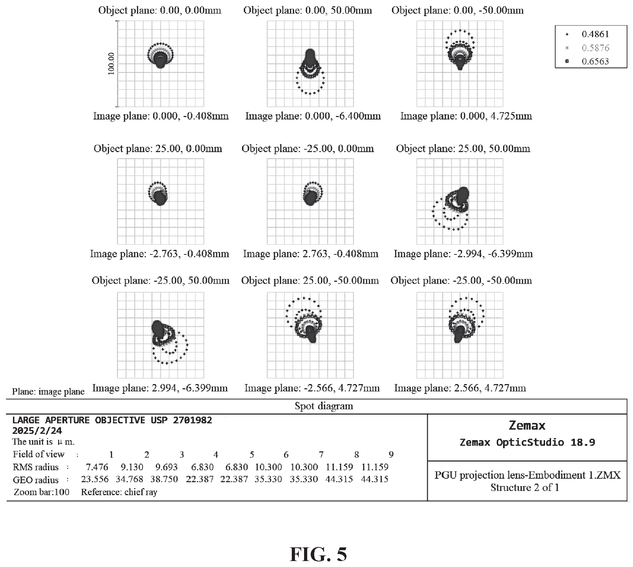

As shown in FIG. 5, in this embodiment, a geometric radius (maximum radius) of the entire optical system is less than 50 micrometers, which satisfies image aberration requirements of the system.

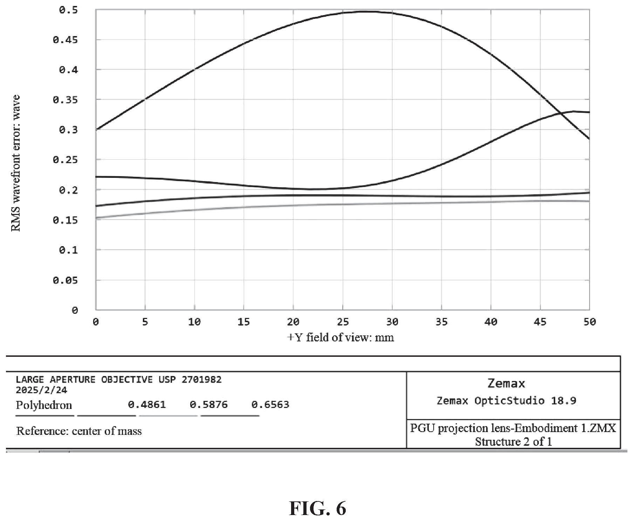

As shown in FIG. 6, in this embodiment, the root mean square of wavefront aberration is less than 0.5, which indicates that resolution and imaging quality of this embodiment satisfies imaging requirements.

As shown in FIG. 7, in this embodiment, the field curvature/distortion satisfies the imaging requirements of the optical system.

As shown in FIG. 8, in this embodiment, at a sampling frequency of 50 line pairs/mm, an MTF value of an entire field of view exceeds 0.4. This indicates that the imaging quality of this embodiment is sufficient to satisfy imaging quality requirements.

In Embodiment 2, as shown in FIG. 9 and FIG. 12, the first negative lens 1 and the third negative lens 4 are H-ZF52 glass lenses, the first positive lens 2 and the third positive lens 6 are H-LAK3 glass lenses, the second negative lens 3 is an H-ZF1 glass lens, the second positive lens 5 is an H-K9L glass lens, and the aperture stop 8 is located between the second negative lens 3 and the third negative lens 4. The prism 7 is made of EAGLEXG glass. Specific parameters of each component in this embodiment are shown in the table below.

| Sequence number | Lens sequence number | Radius /mm | Thickness or air gap/mm | | Glass | Caliber/mm |
|---|---|---|---|---|---|---|
| Object plane | | ∞ | | 150 | AIR | 111.804 |
| 1 | 1 | 35.5637 | | 3.0000 | H-ZF52 | 21.95 |
| 2 | | 14.9904 | | 12.3114 | AIR | 18.94 |
| 3 | 2 | 25.5429 | | 6.0000 | H-LAK3 | 20.06 |
| 4 | | -45.5489 | | 0.7745 | AIR | 19.18 |
| 5 | 3 | 8.6300 | | 6.5000 | H-ZF1 | 13.93 |
| 6 | | 4.5500 | | 3.8948 | AIR | 6.91 |
| 7 (aperture stop plane) | | Infinity | | 4.7704 | AIR | 4.30 |
| 8 | 4 and 5 are cemented lens | -15.8016 | | 2.0000 | H-ZF52 | 8.53 |
| 9 | | 20.2765 | | 5.0000 | H-K9L | 11.22 |
| 10 | | -19.2276 | | 0.1000 | AIR | 13.09 |
| 11 | 6 | 23.9165 | | 4.5000 | H-LAK3 | 16.85 |
| 12 | | -20.1124 | | 1.7000 | AIR | 17.22 |
| 13 | | Infinity | | 18.4000 | H-LAK3 | 16.15 |
| 14 | 7 | Infinity | | 1.0000 | AIR | 13.83 |
| 15 | | Infinity | | 1.1000 | EAGLEXG | 13.61 |
| 16 | DMD glass cover plate | Infinity | | 0.5100 | AIR | 13.45 |
| Image plane | | ∞ | | 0 | AIR | 13.34 |

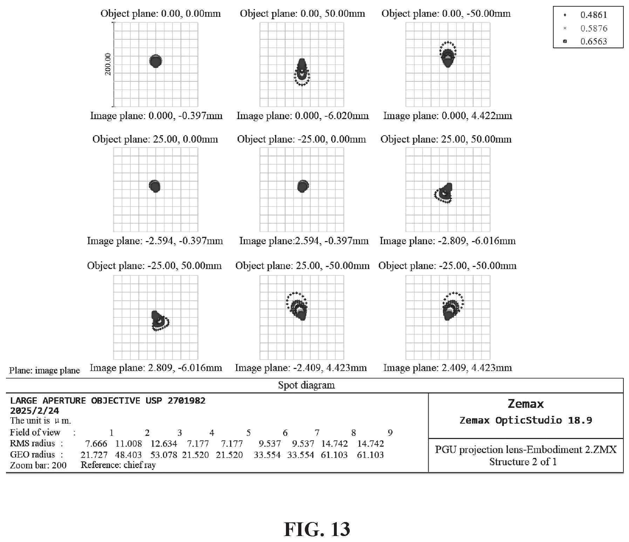

As shown in FIG. 13, in this embodiment, a geometric radius (maximum radius) of the entire optical system is less than 50 micrometers, which satisfies image aberration requirements of the system.

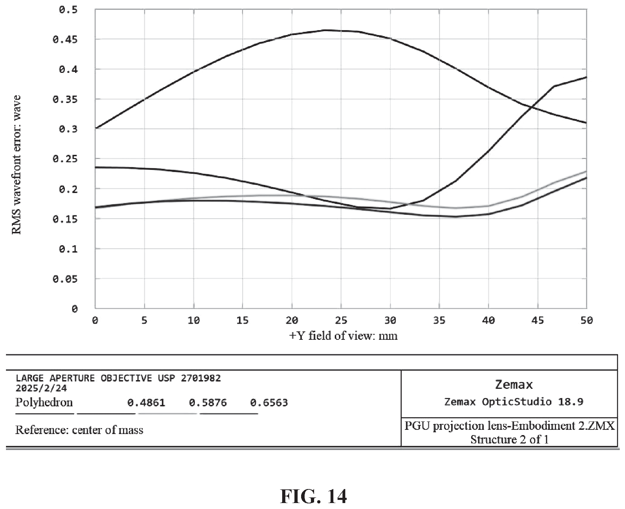

As shown in FIG. 14, in this embodiment, the root mean square of wavefront aberration is less than 0.5, which indicates that resolution and imaging quality of this embodiment satisfies imaging requirements.

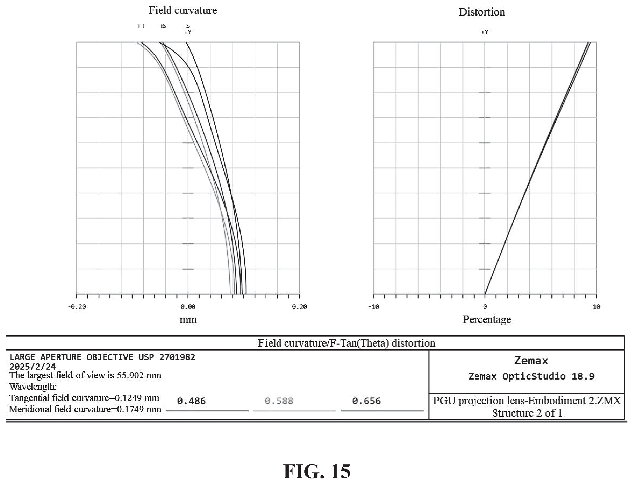

As shown in FIG. 15, in this embodiment, the field curvature/distortion satisfies the imaging requirements of the optical system.

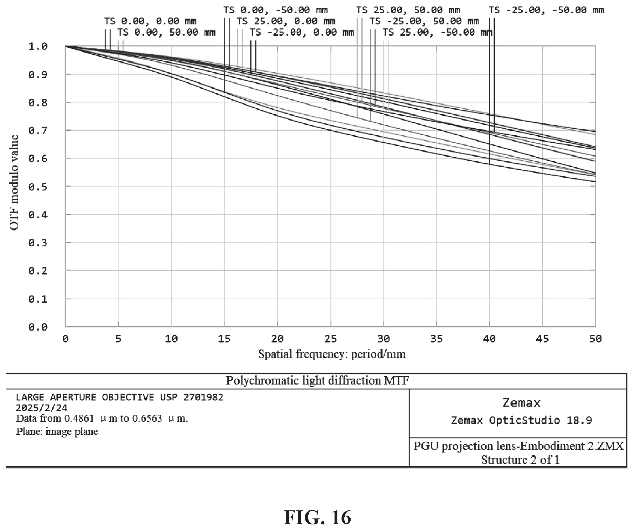

As shown in FIG. 16, in this embodiment, at a sampling frequency of 50 line pairs/mm, an MTF value of an entire field of view exceeds 0.4. This indicates that the imaging quality of this embodiment is sufficient to satisfy imaging quality requirements.

Technical effects of this projection lens are as follows.
I. The PGU projection lens (i.e., the projection lens) has fewer lenses, higher light transmission efficiency and lower cost. Due to the fewer lenses, a number of surfaces of lens glass in contact with air is reduced, light energy loss is significantly reduced, and light transmission efficiency is greatly increased. In addition, the cost is also reduced due to the fewer lenses.
II. Fewer types of glass are used in the PGU projection lens, resulting in fewer sources of error during design and manufacturing, and easier control of image quality. The present disclosure only adopts three or four types of glass, which are very common types of glass, produced by glass factories with well-established and mature manufacturing techniques. Therefore, physicochemical properties of these types of glass are far superior to those of rarer types of glass, especially in refractive index, which is very close to a refractive index adopted in the software. Fewer sources of error enable easier control of image quality.
III. The PGU projection lens provided by the present disclosure employs a technical solution where a certain angle is provided between the diffuser film and the optical axis of the projection lens. During use, backlighting would not cause stray light to overlap with an actual to-be-imaged picture, and would not affect viewing experience. This ensures that stray sunlight rays incident on the diffuser film from an outside of the windshield along an imaging light path have a certain angle with the optical axis of the projection lens. The stray sunlight rays are prevented from reaching a DMD picture source surface, and stray light and the to-be-imaged picture would not overlap, which effectively avoids the influence of stray light.
IV. All the PGU projection lenses adopt spherical surfaces, which have good manufacturability, and lower processing difficulty. The cost is reduced, and image quality would not be affected by temperature changes. The present disclosure only uses glass, specifically spherical lenses, which have a simple processing technology, a mature testing technology, and are easy to be assembled and adjusted. Furthermore, glass is temperature-insensitive, and the spherical surfaces remain unchanged regardless of temperature variations. The change of the temperature would not affect the image quality.
V. The PGU projection lens provided by the present disclosure has high image quality, and can satisfy usage requirements. The present disclosure underwent repeated design optimization, achieving an MTF design value exceeding 0.4 at 50 line pairs per millimeter with a limited number of lenses and glass types. Even considering subsequent errors, a final MTF value reaches 0.32, which is sufficient to satisfy usage requirements.
VI. The present disclosure considers an angle between the emitted chief ray and the optical axis. In the designed PGU projection lens, an angle between the emitted chief ray and the optical axis is less than 2.7 degrees, and is far less than 15 degrees. A DMD picture source is a Lambertian radiator, the closer to the optical axis, the higher the radiated energy. Therefore, the present disclosure maximizes utilization radiated energy of the DMD.

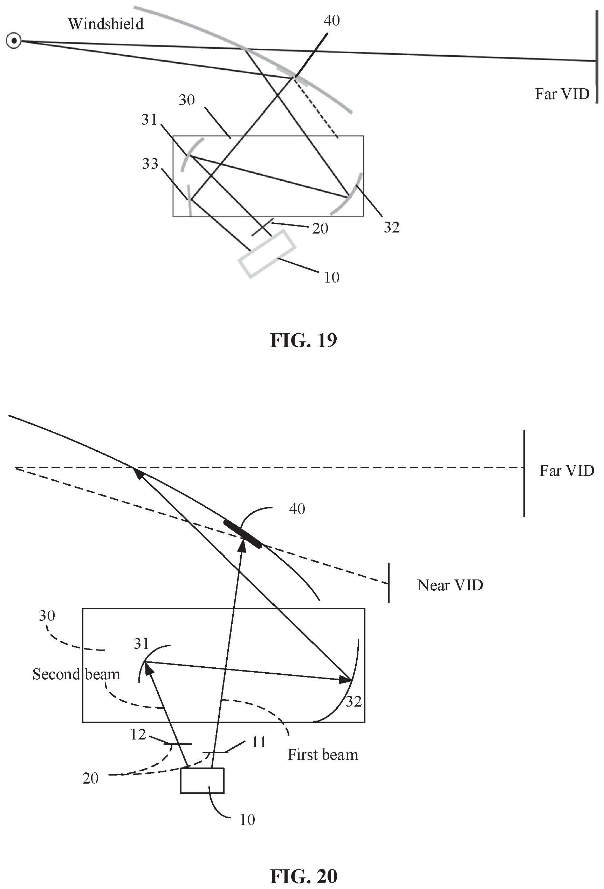

In a specific embodiment, referring to FIG. 18 and FIG. 19, a human-computer interaction system integrating ARHUD and holographic instrument panel (i.e., a head-up display system) provided by the present disclosure includes: a picture generation unit 10, a diffusion element 20, a reflector assembly 30 and a holographic optical element 40. The picture generation unit 10 includes, but is not limited to, the above-mentioned projection lens. Firstly, the projection lens has fewer lenses, higher light transmission efficiency, and lower cost. Secondly, fewer types of glass are used in the PGU projection lens, resulting in fewer sources of error during design and manufacturing, and easier control of image quality. Thirdly, all projection lenses adopt spherical surfaces, which have good manufacturability. Fourthly, the projection lens provides high image quality, which can ensure usage requirements.

The picture generation unit 10 generates target beams, where the target beams include a first beam and a second beam. The first beam carries near-field picture information, and the second beam carries far-field picture information. The content of the picture information carried by the first beam and the second beam differs. The picture generation unit 10 may generate two beams carrying different projection information using its internal optical elements and imaging technology. For example, one beam carries type A projection information, and the other carries type B projection information.

Referring to FIG. 18, the diffusion element 20 achieves uniform light diffusion by reflecting and refracting the incident light for multiple times through its internal microstructure. In this technical solution, the diffusion element 20 is positioned on a transmission path of the second beam, to diffuse the second beam. To ensure that the second beam is clearly and accurately presented in a driver's field of vision, the projected second beam needs to be diffused and homogenized. After diffusion, the second beam is projected as a virtual image projection at a second position. The virtual image projection can display the projection data more clearly and three-dimensionally.

Referring to FIG. 18, the reflector assembly 30 is an optical component, mainly composed of a reflector and a package. In this technical solution, the reflector assembly 30 is used to project the target beams onto a corresponding target position. The target beams consist of the first beam and the second beam, which cannot be directly projected onto the corresponding target position. The target positions include a first position on the windshield where the holographic optical element 40 is located, and a second position on the windshield. Coordinates of the first position and the second position are different on the windshield. In this technical solution, the reflector assembly 30 is at least configured to reflect the second beam to the second position. The second beam projected onto the second position would form a far-field picture on the windshield. The first beam may be reflected by the reflector assembly 30 and then projected onto the first position, or it may be directly projected onto the first position without reflection by the reflector assembly 30.

Referring to FIG. 18, the holographic optical element (HOE) 40 is an optical element made according to the principle of holography, usually fabricated on a photosensitive thin film material. Its function is based on the principle of light diffraction, and is a diffractive optical element. In this technical solution, the holographic optical element 40 is used to diffract the first beam to form a near-field picture on the windshield.

Referring to FIG. 18, during an imaging procedure of the human-computer interaction system integrating ARHUD and holographic instrument panel provided by the present disclosure embodiment, the first beam and the second beam carrying different projection information are generated through the picture generation unit 10. The diffusion element 20 is configured to diffuse and homogenize the second beam. The reflector assembly 30 then projects the first beam and the second beam to the first position and the second position respectively. The first beam projected at the first position undergoes diffraction under the action of the holographic optical element 40, to form a real HOE image on the windshield (the real HOE image refers to a real image generated by a holographic optical element (HOE)). The projection information carried by the first beam is displayed through the HOE image. The second beam projected at the second position forms a far-field virtual image on the windshield, and the projection information carried by the second beam is displayed through a far-field picture. The human-computer interaction system integrating ARHUD and holographic instrument panel only requires one holographic optical element and one optical transmission system to complete the display of two projection information streams. The human-computer interaction system integrating ARHUD and holographic instrument panel has a simple structure and smaller size.

Referring to FIG. 18, in the technical solution disclosed in this embodiment, the type of the picture generation unit 10 may be selected based on design requirements. For example, the picture generation unit 10 may be a picture generation unit based on any one of DLP, LCOS, LBS or Micro LED. Digital Light Processing (DLP) technology is a projection technology based on a Digital Micromirror Device (DMD). A DMD chip is an optical micro-electromechanical system capable of spatial light modulation, and includes millions of tiny aluminum mirrors. Each aluminum mirror corresponds to a pixel. A number of mirrors determines a value of the display resolution. Liquid Crystal on Silicon (LCOS) technology is a novel display technology combining advantages of Liquid Crystal Display (LCD) and Digital Light Processing (DLP). The picture generation unit (PGU) based on Laser Beam Scanning (LBS) technology is one of core components of a Head-Up Display (HUD) system. The above-described picture generation units are merely examples in the present disclosure. Users may also choose other types of picture generation units based on their design requirements.

Referring to FIG. 18, in this embodiment, to ensure that the first beam and the second beam generated by the picture generation unit 10 do not interfere with or confuse each other, the picture generation unit 10 may include a first display area and a second display area. The first display area is configured to generate the first beam, and the second display area is configured to generate the second beam. Emitted angles of each beam generated by the picture generation unit 10 may be different, allowing the beams to separate after being emitted, thus facilitating the arrangement of the diffusion element 20 and the reflector assembly 30.

Referring to FIG. 18, in the technical solution disclosed in this embodiment, a specific type of the diffusion element 20 may be selected based on design requirements. It may be any diffusion film known in the related art that can satisfy diffusion requirements of this technical solution. For example, it may be a gradient diffusion film or a deflection diffusion film.

Referring to FIG. 18, in the technical solution disclosed in this embodiment, a specific structure of the reflector assembly 30 may be arranged based on an incident direction of a beam required to be intervened and a target position corresponding to the beam required to be intervened. In this embodiment, the reflector assembly 30 may include at least one reflector group, and each reflector group corresponds to a different beam. The reflector group is configured to reflect an incident beam corresponding to a reflector group to the target position corresponding to the incident beam.

For example, referring to FIG. 18, the reflector assembly 30 includes a first reflector group. The reflector assembly 30 includes a first reflector 31 and a second reflector 32. The first reflector 31 and the second reflector 32 face each other, to reflect the second beam to the second position corresponding to the second beam. When using the first reflector 31 and the second reflector 32 to correct an optical path of the second beam, positions and angles of the first reflector and the second reflector may be arranged based on an incident angle of the second beam and the second position corresponding to the second beam.

In this embodiment, referring to FIG. 18, a type of reflector in the reflector assembly 30 may be set based on reflection requirements. The reflector may be a plane mirror or a curved mirror. For example, in the embodiment shown in FIG. 18, the first reflector may be a plane mirror or a curved mirror, and the second reflector is a curved mirror.

In this embodiment, referring to FIG. 18, the reflector assembly may further include a second reflector group. The second reflector group is configured to reflect the first beam to the first position corresponding to the first beam. In the technical solution disclosed in this embodiment, when it is necessary to use the reflector assembly 30 to correct a path of the first beam, the first beam falls at the first position, and the second reflector group for path correction of the first beam needs to be set in the reflector assembly 30. A number and distribution of reflectors in the second reflector group may be determined based on an incident angle of the first beam and the first position. For example, in the example of FIG. 19, only one reflector is required to reflect the first beam to the first position. Therefore, the second reflector group may include only one reflector, which is denoted as a third reflector 33. The third reflector 33 is configured to reflect the incident beam to the first position. The third reflector may be a plane mirror, and a reflection angle of the third reflector may be determined based on the incident angle of the first beam and a specific position of the first position.

In the technical solution disclosed in this embodiment, referring to FIG. 18, the projection information carried by the first beam and the second beam may be determined based on relevant requirements. Users may adjust, through system control, specific content of the projection information carried by the first beam and the second beam generated through the picture generation unit 10 based on their own requirements. For example, in this embodiment, the projection information carried by the first beam includes vehicle state information, and the information carried by the second beam includes non-vehicle state information. The vehicle state information includes at least one of or a combination of any one or more of instrument panel information, vehicle speed information, fuel amount information, prompt information and alarm information. The non-vehicle state information includes at least one of or a combination of any one or more of navigation and positioning information, traffic safety warning information, smart office information, and entertainment information.

In this embodiment, when a target user (in an automobile scenario, the target user may be a driver) views projected pictures at the first position and the second position, the target user may pay more attention to data in a particular area of the projected picture. Furthermore, users adapt differently to different brightness levels of projected pictures under different ambient light conditions. For example, in high ambient light conditions, the brightness of the projected picture needs to be increased, and in low ambient light conditions, the brightness of the projected picture needs to be decreased. To achieve eye-tracking functionality and adaptive brightness adjustment for the projected pictures at the first position and the second position, the human-computer interaction system integrating ARHUD and holographic instrument panel provided by this embodiment may further include a photoelectric control module. The photoelectric control module is used to implement eye-tracking functionality and adaptive brightness adjustment for the projected pictures at the first position and the second position. In this case, the human-computer interaction system integrating ARHUD and holographic instrument panel may automatically adjust the projected pictures at the first position and the second position based on user's gaze, and automatically adjust the brightness of the projected pictures at the first position and the second position, so that the projected pictures may follow the user's gaze and automatically adjust their own brightness based on ambient brightness.

In another specific embodiment, to address issues of complex structure and large system size in a dual-optical-path HUD imaging system, the present disclosure provides a dual-head-up display fusion imaging system (i.e., a head-up display system). The dual-head-up display fusion imaging system generates two beams carrying different projection information through a picture generation unit. One beam is directly reflected through a windshield for display, and the other beam is displayed after passing through a holographic optical element. Therefore, the optical path system requires only one holographic optical element and one optical transmission system, resulting in a simple structure and small size.

Referring to FIG. 20, an embodiment of the present disclosure discloses a dual-head-up display fusion imaging system, including: a picture generation unit 10, a diffuser element 20, a reflector assembly 30 and a holographic optical element 40. The picture generation unit 10 includes, but is not limited to, the above-mentioned projection lens. Firstly, the projection lens has fewer lenses, higher light transmission efficiency, and lower cost. Secondly, fewer types of glass are used in the PGU projection lens, resulting in fewer sources of error during design and manufacturing, and easier control of image quality. Thirdly, all projection lenses adopt spherical surfaces, which have good manufacturability. Fourthly, the projection lens provides high image quality, which can ensure usage requirements.

Referring to FIG. 20, the picture generation unit 10 generates target beams, where the target beams include a first beam and a second beam. The first beam carries near-field picture information, and the second beam carries far-field picture information. The data content included in the near-field picture information and the far-field picture information differs. The picture generation unit 10 may generate two beams carrying different projected picture information using its internal optical elements and imaging technology. For example, one beam carries type A picture information, and the other beam carries type B picture information.

Referring to FIG. 20, the diffusion element 20 includes a near-field diffusion sub-element 11 and a far-field diffusion sub-element 12. The near-field diffusion sub-element 11 is configured to diffuse and homogenize the first beam, and the far-field diffusion sub-element 12 is configured to diffuse and homogenize the second beam. In this technical solution, the diffusion element 20 can diffuse and homogenize the beam emitted by the picture generation unit 10 to improve visibility and readability of the projected picture.

Referring to FIG. 20, the reflector assembly is an optical component, mainly composed of a reflector and a package. In this technical solution, the reflector assembly 30 is used to project the diffused target beams onto a corresponding target position. The target positions include a first position on the windshield where the holographic optical element 40 is located, and a second position on the windshield. Coordinates of the first position and the second position are different on the windshield. In this technical solution, the reflector assembly 30 is configured to reflect a beam required to be reflected. The first beam being directly projected or projected after being corrected by the reflector assembly onto the first position undergoes diffraction under the action of the holographic optical element 40, to form a near-field picture. The second beam forms a far-field picture on the windshield after being corrected by the reflector assembly and projected onto the second position, thereby completing projection of two images.

Referring to FIG. 20, a holographic optical element (HOE) is an optical element made according to the principle of holography, usually fabricated on a photosensitive thin film material. Its function is based on the principle of light diffraction, to form a projected picture. In this technical solution, the holographic optical element 40 is used to diffract the first beam, to form a near-field picture.

Referring to FIG. 20, during an imaging procedure of the dual-head-up display fusion imaging system provided by the present disclosure, the first beam and the second beam carrying different projection information are generated through a picture generation unit 10. The diffusion element 20 is used to uniformly diffuse the first beam and the second beam, and the reflector assembly 30 is used to correct paths of the first beam and the second beam. Finally, the first beam is projected to the first position, and the second beam is projected to the second position. The first beam projected at the first position undergoes diffraction under the action of the holographic optical element 40, to form a near-field picture in front of the windshield. The projection information carried by the first beam is displayed through near-field picture. The second beam projected at the second position forms a far-field picture in front of the windshield, and the projection information carried by the second beam is displayed through the far-field picture. The dual-head-up display fusion imaging system only requires one holographic optical element and one optical transmission system to complete the display of two projection information streams. The dual-head-up display fusion imaging system has a simple structure and smaller size.

Referring to FIG. 20, in the technical solution disclosed in this embodiment, the type of the picture generation unit 10 may be selected based on design requirements. For example, the picture generation unit 10 may be a picture generation unit based on any one of DLP, LCOS, LBS or Micro LED. Digital Light Processing (DLP) technology is a projection technology based on a Digital Micromirror Device (DMD). A DMD chip is an optical micro-electromechanical system capable of spatial light modulation, and includes millions of tiny aluminum mirrors. Each aluminum mirror corresponds to a pixel. A number of mirrors determines a value of the display resolution. Liquid Crystal on Silicon (LCOS) technology is a novel display technology combining advantages of Liquid Crystal Display (LCD) and Digital Light Processing (DLP). The picture generation unit (PGU) based on Laser Beam Scanning (LBS) technology is one of core components of a Head-Up Display (HUD) system. The above-described picture generation units are merely examples in the present disclosure. Users may also choose other types of picture generation units based on their design requirements.

In this embodiment, referring to FIG. 20, to ensure that the first beam and the second beam generated by the picture generation unit 10 do not interfere with or confuse each other, the picture generation unit 10 may include a first display area and a second display area. The first display area is configured to generate the first beam, and the second display area is configured to generate the second beam. Emitted angles of each beam generated by the picture generation unit 10 may be different, allowing the beams to separate after being emitted, thus facilitating the arrangement of the diffusion element 20 and the reflector assembly 30.

In this embodiment, referring to FIG. 20, a first sub-diffuser element and a second sub-diffuser element are independent encapsulation structures or combined integral encapsulation structures. When the first sub-diffuser element and the second sub-diffuser element are combined integrally encapsulated, an angle between the first sub-diffuser element and the first beam, and an angle between the second sub-diffuser element and the second beam are matched to ensure clear imaging of the target beam.

In the technical solution disclosed in this embodiment, referring to FIG. 20, the diffusion element 20 mainly diffuses the beams through its internal diffusion film. A specific type of the diffusion film in the diffusion element 20 may be selected based on design requirements. It may be any diffusion film known in the related art that can satisfy diffusion requirements of this technical solution. For example, it may be a gradient diffusion film or a deflection diffusion film.

In the technical solution disclosed in this embodiment, referring to FIG. 20, a specific structure of the reflector assembly 30 may be arranged based on a number of beams required to be intervened, incident directions of the beams required to be intervened, and target positions corresponding to each beam of the beams required to be intervened. In this embodiment, the reflector assembly 30 may include at least one reflector group, and each reflector group corresponds to a different beam. The reflector group is configured to reflect an incident beam corresponding to a reflector group to the target position corresponding to the incident beam.

For example, referring to FIG. 20, the reflector assembly 30 includes a first reflector group. The reflector assembly 30 includes a first reflector 31 and a second reflector 32. The first reflector 31 and the second reflector 32 face each other, to reflect the second beam to the second position corresponding to the second beam. When correcting an optical path of the second beam, positions and angles of the first reflector 31 and the second reflector 32 may be arranged based on an incident angle of the second beam and a target position corresponding to the second beam.

In this embodiment, referring to FIG. 20, a type of reflector in the reflector assembly 30 may be set based on reflection requirements. The reflector may be a plane mirror or a curved mirror. For example, in the embodiment shown in FIG. 20, the first reflector may be a plane mirror or a curved mirror, and the second reflector may be a curved mirror.

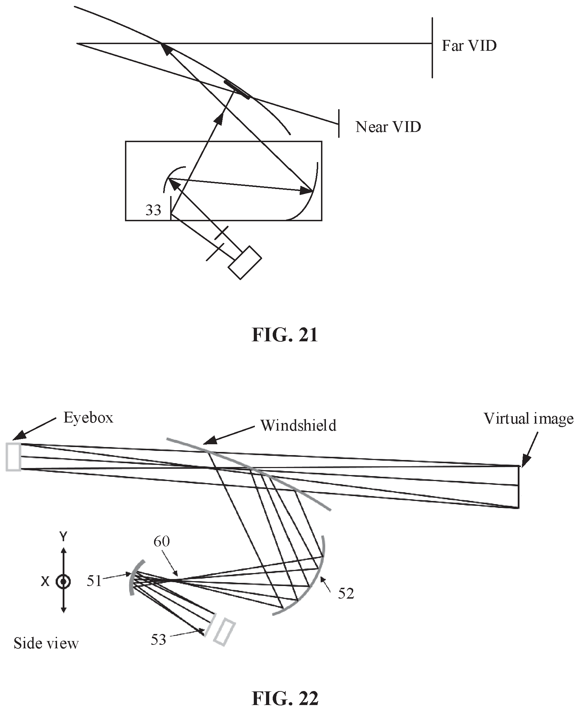

In this embodiment, referring to FIG. 20, the first beam may be directly projected onto the first position after passing through the near-field diffuser element, or the first beam may be projected onto the first position after being reflected by the reflectors in the reflector assembly. In this case, the reflector assembly may further include a second reflector group, the second reflector group is configured to reflect the first beam to the first position corresponding to the first beam. Similarly, a number and distribution of reflectors in the second reflector group may be determined based on an incident angle of the first beam and the first position. For example, in the example of FIG. 21, only one third reflector 33 is required to reflect the first beam to the first position. The third reflector may be a plane mirror, and a reflection angle of the third reflector may be determined based on the incident angle of the first beam and a specific position of the first position.

In the technical solution disclosed in this embodiment, referring to FIG. 18, the projection information carried by the first beam and the second beam may be determined based on relevant requirements. Users may adjust, through system control, specific content of the projection information carried by the first beam and the second beam generated through the picture generation unit 10 based on their own requirements. For example, in this embodiment, the projection information carried by the first beam includes vehicle state information, and the information carried by the second beam includes non-vehicle state information. The vehicle state information includes at least one of or a combination of any one or more of instrument panel information, vehicle speed information, fuel amount information, prompt information and alarm information. The non-vehicle state information includes at least one of or a combination of any one or more of navigation and positioning information, traffic safety warning information, smart office information, and entertainment information.

Furthermore, the present disclosure further discloses an automobile that can apply the dual head-up display fusion imaging system described in any of the above embodiments.

As may be seen from the above solutions, referring to FIG. 20 and FIG. 21, on one hand, the dual head-up display fusion imaging system provided by the present disclosure integrates the advantages of HOE and HUD. Projection light of an HOE optical path system is precisely controlled and guided, to achieve efficient and high-resolution imaging in a relatively small space. The combination of the HOE and the HUD enables flexible design of an optical path according to interior space and shape of the automobile, and optimizes layout of the interior space. On the other hand, different imaging methods can ensure the stability of near-field information while enhancing experience for far-field depth information, improving overall display effect and creating superior visual experience and information interaction platform for a driver.

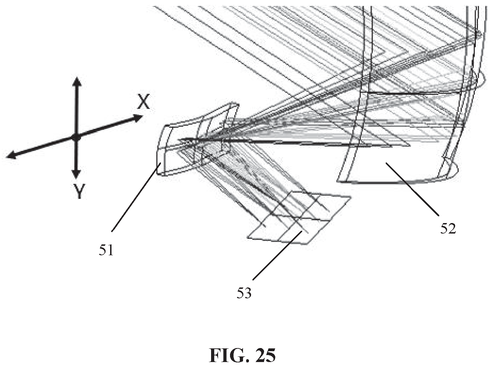

In an optional technical solution, as shown in FIG. 22 and FIG. 25, an in-vehicle head-up display system includes: a projection lens (which may be the projection lens mentioned above, or other projection lenses different from those mentioned above). The in-vehicle head-up display system further includes a reflective assembly 50.

The reflective assembly 50 is disposed on a side of a windshield 70 inside the vehicle, and is configured to reflect picture light emitted from the projection lens onto the windshield. The picture light emitted from the projection lens passes sequentially through the reflective assembly 50, and then forms a virtual image on the windshield 70. A driver, sitting in the car, may clearly see information presented by the virtual image (such as vehicle speed information, rotation speed, power consumption information, gear information, and other auxiliary function information, etc.) at a position of an eyebox.

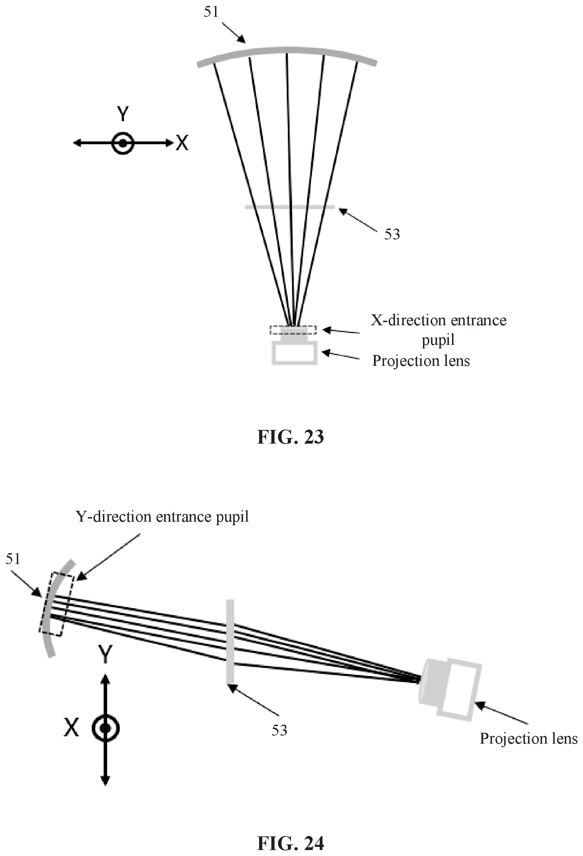

As shown in FIG. 22 and FIG. 24, the reflective assembly 50 includes a first reflector 51 and a second reflector 52 arranged sequentially.

The first reflector 51 is configured to reflect picture light emitted from the projection lens to the second reflector 52, and the second reflector 52 is configured to reflect the picture light reflected from the first reflector 51 to the windshield to form the virtual image.

The first reflector 51 is a concave mirror, such that the picture light reflected from the first reflector 51 forms an intermediate image plane 60 on a path from the first reflector 51 to the second reflector 52. The intermediate image plane 60 is an intermediate image plane of a Y-direction component of the picture light.

As shown in FIG. 22, the second reflector 52 is also a concave mirror. Concave surfaces of the first reflector 51 and the second reflector 52 are arranged opposite each other, which can reflect the picture light while further reducing a size of the in-vehicle head-up display system.

In the above technical solution, during use, the picture light emitted from the projection lens passes sequentially through the first reflector 51 and the second reflector 52. Since the first reflector 51 is provided as a concave mirror, the picture light reflected from the first reflector 51 forms the intermediate image plane 60 on the path from the first reflector 51 to the second reflector 52. In general, the picture light reflected from the first reflector 51 converges near a focal point of the first reflector 51, the intermediate image plane 60 enables the emitted picture light to exchange positions vertically relative to the picture light on the first reflector 51, and then the picture light reaches the second reflector 52. In an embodiment, the first reflector 51 has a large curvature along the Y-direction to form a concave surface in the Y-direction, allowing the Y-direction component of the light emitted from the projection lens to converge on a path from the projection lens to the second reflector 52 (i.e., forming the intermediate image plane 60). Based on this configuration, space below the second reflector 52 is more than optical path space of a traditional non-converging vehicle head-up display system, which enables more compact arrangement of a diffuser film fixed structure and other components, and further reduces size of the HUD.

As shown in FIG. 22 and FIG. 24, the above technical solution is optimized by arranging a light deflecting element 53 between the first reflector 51 and the projection lens. The Y-direction component of the picture light passing through the light deflecting element 53 converges (which may be understood as converge along a length direction of a surface). Overlap of the picture light emitted from the projection lens on the first reflector 51 increases, usage size of the first reflector 51 in the Y-direction is reduced, and volume of the HUD is compressed. It should be noted that the light deflecting element ensures an emitted angle of the picture light passing through the light deflecting element 53 matches an incident angle of the reflective assembly, which is achieved mainly by deflecting the Y-direction component of the picture light. Furthermore, the light deflecting element 53 further reduces a distance between the intermediate image plane 60 and the first reflector 51, further compressing a gap between the first reflector 51 and the second reflector 52, thereby making the size of the in-vehicle head-up display system more smaller.

In an optional technical solution, the light deflecting element 53 includes: a Fresnel lens, a freeform lens and a deflecting gradient diffuser film sequentially arranged between the projection lens and the first reflector 51.

The picture light emitted from the projection lens passes the Fresnel lens, then the freeform lens, and then the deflecting gradient diffusion film, and the Y-direction component of the picture light converges on the first reflector 51 after being deflected. In an embodiment, the Fresnel lens, the freeform lens and the deflecting gradient diffuser film may be disposed near a projection plane of the projection lens to achieve pupil matching of the Y-direction component and improve light efficiency. It should be noted that both the Fresnel lens and the freeform lens are disposed at an area near the deflecting gradient diffuser film, and are fixed by using a structural component. By adopting the structural component, he Fresnel lens and the freeform lens may be quickly fixed. In an embodiment, the Fresnel lens, the freeform lens and the deflecting gradient diffuser film are an integrated structure. The integrated structure can improve optical efficiency, reduce light loss, simplify production and assembly, and reduce overall costs.

In an optional technical solution, curvatures of concave freeform surfaces of the first reflector 51 and the second reflector 52 may be flexibly optimized and adjusted based on automotive environment and customer parameter requirements.

In an optional technical solution, after the picture light emitted from the projection lens passes the Fresnel lens, then the freeform lens, and then the deflecting gradient diffusion film, an X-direction component of the picture light is not deflected, and the X-direction component of the picture light diverges on the second reflector 52. As shown in FIG. 23, when specifically used with the projection lens, an exit pupil of the projection lens is close to an X-direction entrance pupil of the picture light, which is located near an aperture stop in the PGU lens. At this time, the X-direction component of the picture light from the projection lens is divergent on the second reflector 52. It should be noted that the light deflecting element 53 cannot converge the X-direction component of the picture light from the projection lens.

It should be noted that the X-direction entrance pupil in FIG. 23 takes the picture light emitted from the projection lens as a reference, and the Y-direction entrance pupil in FIG. 24 takes the picture light passing through the light deflecting element 53 as a reference.

Various embodiments described in this specification are presented in a progressive manner, with each embodiment focusing on its differences from other embodiments. Similar or identical parts between embodiments may be referred to interchangeably.

The above description of the disclosed embodiments enables those skilled in the art to make or use the present disclosure. Various modifications to these embodiments would be readily apparent to those skilled in the art, and the general principles defined herein may be implemented in other embodiments without departing from the spirit or scope of the present disclosure. Therefore, the present disclosure is not to be limited to the embodiments shown herein, and is to be accorded the widest scope consistent with the principles and novel features disclosed herein.

## Claims

1. A projection lens, applied to an in-vehicle head-up display system, and comprising: a front lens group, an aperture stop (8) and a rear lens group that are arranged coaxially in the above-listed sequence from an object plane (9) to an image plane (13),
wherein the front lens group comprises: a first negative lens (1), a first positive lens (2) and a second negative lens (3) that are arranged coaxially in the above-listed sequence from the object plane (9) to the aperture stop (8), wherein the first negative lens (1) and the second negative lens (3) are concave meniscus lenses, a concave surface of the first negative lens (1) faces the first positive lens (2), and a concave surface of the second negative lens (3) faces the aperture stop (8); and
wherein the rear lens group comprises: a third negative lens (4), a second positive lens (5) and a third positive lens (6) that are arranged coaxially in the above-listed sequence from the aperture stop (8) to the image plane (13), wherein the third negative lens (4) and the second positive lens (5) are cemented together to form a cemented lens, and a prism (7) is arranged between the third positive lens (6) and the image plane (13).

2. The projection lens according to claim 1, wherein a DMD glass cover plate (14) is provided on a DMD chip between the prism (7) and the image plane (13).

3. The projection lens according to claim 2, wherein the DMD glass cover plate (14) is made of EAGLE XG^{®} material.

4. The projection lens according to any one of claims 1 to 3, wherein the first negative lens (1), the second negative lens (3) and the third negative lens (4) are made of glass of H-ZF52 type.

5. The projection lens according to any one of claims 1 to 3, wherein the first positive lens (2) and the third positive lens (6) are made of glass of H-LAK3 type.

6. The projection lens according to any one of claims 1 to 3 or 5, wherein the second positive lens (5) is made of glass of H-ZK7 type.

7. The projection lens according to any one of claims 1 to 3 or 6, wherein the first negative lens (1) and the third negative lens (4) are made of glass of H-ZF52 type.

8. The projection lens according to any one of claims 1 to 3, 5 or 7, wherein the second negative lens (3) is made of glass of H-ZF1 type.

9. The projection lens according to any one of claims 1 to 3, 5 or 7, wherein the second positive lens (5) is made of glass of H-K9L type.

10. The projection lens according to any one of claims 1 to 9, wherein the first negative lens (1), the first positive lens (2), the second negative lens (3), the third negative lens (4), the second positive lens (5) and the third positive lens (6) are all spherical lenses.

11. An in-vehicle head-up display system, comprising: an object plane (9) and the projection lens according to any one of claims 1 to 10, wherein a diffusion element (20) is provided at a position of the object pane (9), and an angle between a normal of the diffusion element (20) and an optical axis of the projection lens is non-zero.

12. An in-vehicle head-up display system, comprising the projection lens according to any one of claims 1 to 10, wherein an angle between an emitted chief ray of the projection lens and an optical axis of the emitted chief ray is non-zero and ranges from 1.7 to 2.7 degrees.

13. An in-vehicle head-up display system, comprising a picture generation unit (10), a diffusion element (20) and a reflector assembly (30), wherein the picture generation unit (10) comprises the projection lens according to any one of claims 1 to 10, wherein
the picture generation unit (10) is configured to generate a first beam and a second beam, wherein the first beam carries near-field picture information, and the second beam carries far-field picture information;
the diffusion element (20) is configured to diffuse and homogenize the second beam; and
the reflector assembly (30) is configured to reflect one or both of the first beam and the diffused second beam to a corresponding target position on a windshield, wherein the target position comprises a first position and a second position located on the windshield, and a holographic optical element (40) is located at the first position,
wherein the first beam diffracts at the first position on the windshield to form a real image, and the diffused second beam forms a far-field virtual image in front of the windshield after being reflected at the second position on the windshield;
the picture generation unit (10) is a picture generation unit based on DLP or LCOS or LBS or Micro LED; and
the picture generation unit (10) comprises a first display area and a second display area, wherein the first display area is configured to generate the first beam, and the second display area is configured to generate the second beam.

14. An in-vehicle head-up display system, comprising a picture generation unit (10), a diffusion element (20) and a reflector assembly (30), wherein the picture generation unit (10) comprises the projection lens according to any one of claims 1 to 10, wherein
the picture generation unit (10) is configured to generate target beams, wherein the target beams comprise a first beam and a second beam, wherein the first beam carries near-field picture information, and the second beam carries far-field picture information;
the diffusion element (20), the diffusion element (20) comprises a near-field diffusion sub-element (11) and a far-field diffusion sub-element (12), wherein the near-field diffusion sub-element (11) is configured to diffuse and homogenize the first beam, the far-field diffusion sub-element (12) is configured to diffuse and homogenize the second beam; and
the reflector assembly (30) is configured to reflect the diffused and homogenized target beams to corresponding target positions on a windshield, wherein the target positions comprise a first position and a second position located on the windshield, and a holographic optical element (40) is located at the first position,
wherein the diffused and homogenized first beam undergoes a diffraction effect at the first position to form a near-field virtual image in front of the windshield, and the diffused and homogenized second beam forms a far-field virtual image in front of the windshield after being reflected at the second position;
the picture generation unit (10) is a picture generation unit based on DLP or LCOS or LBS or Micro LED;
the picture generation unit comprises a first display area and a second display area, wherein the first display area is configured to generate the first beam, and the second display area is configured to generate the second beam.

15. An in-vehicle head-up display system, comprising the projection lens according to any one of claims 1 to 10, and further comprising a reflective assembly (50),
wherein the reflective assembly (50) comprises: a first reflector (51) and a second reflector (52) arranged sequentially,
wherein the first reflector (51) is configured to reflect picture light emitted from the projection lens to the second reflector (52), and the second reflector (52) is configured to reflect the picture light reflected from the first reflector (51) to a windshield to form a virtual image,
wherein the first reflector (51) is a concave mirror, the picture light reflected from the first reflector (51) forms an intermediate image plane (60) on a path from the first reflector (51) to the second reflector (52), and the intermediate image plane (60) is an intermediate image plane of a Y-direction component of the picture light; and
the second reflector (52) is a concave mirror, and concave surfaces of the first reflector (51) and the second reflector (52) face each other.

16. The in-vehicle head-up display system according to claim 15, wherein a light deflecting element (53) is arranged between the first reflector (51) and the projection lens, the Y-direction component of the picture light passing through the light deflecting element (53) converges.

17. The in-vehicle head-up display system according to claim 16, wherein the light deflecting element (53) comprises: a Fresnel lens, a freeform lens and a deflecting gradient diffusion film sequentially arranged between the projection lens and the first reflector (51); and
the picture light emitted from the projection lens passes the Fresnel lens, then the freeform lens, and then the deflecting gradient diffusion film, and the Y-direction component of the picture light converges on the first reflector (51) after being deflected.

18. The in-vehicle head-up display system according to claim 17, wherein the Fresnel lens and the freeform lens are fixed by a structural component.

19. The in-vehicle head-up display system according to claim 17, wherein the Fresnel lens, the freeform lens and the deflecting gradient diffusion film are an integrated structure.

20. The in-vehicle head-up display system according to claim 17, wherein after the picture light emitted from the projection lens passes the Fresnel lens, then the freeform lens, and then the deflecting gradient diffusion film, an X-direction component of the picture light is not deflected, and the X-direction component of the picture light diverges on the second reflector (52).
